# EUROPÄISCHE PATENTSCHRIFT

(11) **EP 0 327 598 B1**
(45) Veröffentlichungstag und Bekanntmachung des Hinweises auf die Patenterteilung: **25.09.1996**
(21) Anmeldenummer: 88900766.2
(22) Anmeldetag: 12.01.1988
(51) Int. Cl.: E21B 7/14, E21B 7/15, E21B 10/02, E21B 25/10

(54) **SCHMELZBOHR-VERFAHREN**
FUSION-DRILLING PROCESS
PROCEDE DE FORAGE THERMIQUE

(30) Priorität: 22.01.1987 DE 3701676
(43) Veröffentlichungstag der Anmeldung: 16.08.1989
(73) Patentinhaber: COMPISA AG, CH-8702 Zollikon (CH)
(72) Erfinder: Foppe, Werner, D-5130 Geilenkirchen (DE)
(74) Vertreter: Felber, Josef
(86) Internationale Anmeldenummer: DE8800013
(87) Internationale Veröffentlichungsnummer: WO8805491

(56) Entgegenhaltungen:
- DE-C- 617 847
- DE-C- 2 554 101
- GB-A- 1 179 093
- US-A- 3 467 206
- US-A- 3 468 387
- US-A- 3 708 022
- US-A- 4 066 138
- ISA Transactions, Vol. 13, No. 3, 1974 (Pittsburgh, PA. US), J. W. Neudecker: "Subterrene instrumentation requirements", pages 199-201
- Petroleum Engineer, Vol. 46, No. 7, July 1974, (Dallas, TExas, US), D.L. Sims:"Melting glass-lined holes:new drilling technology", pages 80-92, see page 84, left column, line 24-page 88, left column, line 16
- Mining & Minerals Engineering, Juli 1968, (London, GB), "Headline news. Eletron beam rock cutter", Seite 7

## Beschreibung

Die Erfindung betrifft ein Schmelzbohr-Verfahren für Tunnel, Tief- und Explorationsbohrungen, bei dem mittels eines Brenngases aus einer Wasserstoff-Sauerstoff-Mischung als Wärmequelle das Profil des Tunnels beziehungsweise Bohrlochs niedergeschmolzen und beim Vorrücken die entstehende Gesteinsschmelze in das anstehende Seitengestein abgepresst wird.

Ein solches Schmelzbohr-Verfahren, bei dem die Schmelze ins Seitengestein verpresst wird, ist aus der DE-PS 25 54 101 grundsätzlich bekannt. Bei diesem Verfahren wird der gesamte Bohrtunnel- beziehungsweise Bohrlochquerschnitt erschmolzen. Die dabei anfallende Schmelze muss nach der Lithofrac-Technik in das umgebende Gestein abgepresst werden. Die Brenngase müssen bei zunehmender Bohrtiefe mit erhöhtem Druck eingebracht werden, da bei zunehmender Bohrtiefe der Ueberlagerungsdruck des Seitengesteins zunimmt und damit entsprechend die Scherkräfte im Gestein anwachsen.

Aus der US-A-4'066'138 ist eine Vorrichtung bekannt, um mittels Laser-Strahlen einen Bohrkern aus dem Gestein herauszulösen, indem das Gestein in einem ringförmigen Bereich um den Bohrkern verdampft wird. Der stehengelassene Kern wird mittels pulsierender, hoch-energetischer Laser-Pulse durch Thermoschocks zum Bersten gebracht, wonach durch Einpumpen von Flüssigkeit, die danach mittels der Laser-Strahlen verdampft wird, ein solcher Druck im Bereich unterhalb des Kerns erzeugt werden soll, dass dieser aus dem Loch herausgefördert wird. Das Gestein wird nicht in flüssigem Zustand in das Seitengestein oder in den stehengelassenen Bohrkern verpresst, sondern wird verdampft. Es handelt sich bei diesem Schmelzbohr-Verfahren nicht um ein Verdrängungsverfahren wie dies beim Verfahren nach der vorliegenden Erfindung der Fall ist.

Die Patentschrift US-A-3'468'387 offenbart ein Gerät, mittels dessen unveränderte Bohrkern-Proben aus der Erdkruste evakuiert werden sollen. Die Wärme wird indirekt durch das Bohrgerätmaterial hindurch auf die bereits vorhandene Gesteinsschmelze gebracht, wonach die Schmelze mechanisch nach unten gefördert wird, wo sie weiteres Gestein aufschmilzt, das dann innerhalb des Bohrgerätes nach oben fliesst, wodurch ein Bohrkern ummantelt wird. Die erzeugte Schmelze bildet also bloss den äusseren Mantel des Bohrkernes oder der Bohrkern wird vollständig von Schmelze gebildet. Es handelt sich auch hier nicht um ein Verdrängungsverfahren, bei dem die Schmelze durch Aufbringen hoher Drucke infolge von Lithofrac ins Gestein verpresst wird.

Die Veröffentlichung ISA Transactions Vol. 13, No. 3, 1974 zeigt einen Geoprospektor, welcher zur Vornahme von Untersuchungsbohrungen gedacht ist. Die Schmelze wird auch hier vollständig als Bohrkern nach hinten gepresst und somit nicht verdrängt.

Schliesslich zeigt die Veröffentlichung Petroleum Engineer, Vol. 46, No. 7, July 1974, ein Niederschmelzen von Gestein, bei dem ein im wesentlichen unversehrter Kern stehenbleibt. Die Schmelze wird nur längs der Aussenwand des in festem Zustand verbliebenen Teils des Kernes emporgefördert, wo sie schliesslich abkühlt und einen glasartigen Aussenmantel des Kernes bildet. Wiederum handelt es sich nicht um ein Verdrängungsverfahren, bei dem der Lithofrac-Effekt ausgenützt wird.

Im Gegensatz zu diesen Verfahren betrifft das erfindungsgemässe Schmelzbohr-Verfahren ein kontinuierlich arbeitendes Verdrängungsverfahren der eingangs erwähnten und mit der DE-PS 25 54 101 zitierten Art, bei dem grundsätzlich unter Ausnützung des Lithofrac-Effektes die erzeugte Schmelze mit einem so hohen Druck beaufschlagt wird, dass die Scherkräfte im umliegenden Gestein überwunden werden und es aufreisst, wonach die Schmelze in die erzeugten Risse verpresst wird. Bei zunehmender Bohrtiefe muss bei diesem Verfahren für das Aufreissen des Seitengesteins und das Einpressen der Schmelze in das Gestein diese unter einen erhöhten Druck gebracht werden. Sobald aber der Ueberlagerungsdruck im umliegenden Seitengestein so hoch wird, dass die technisch beherrschbaren Brenngasdrucke, mit welchen die Schmelze maximal beaufschlagbar ist, nicht mehr ausreichen, um das Seitengestein aufzureissen und einen Lithofrac zu erzeugen, kommt das Verfahren zum Stillstand.

Es ist deshalb die Aufgabe der vorliegenden Erfindung, ein Verfahren der eingangs erwähnten Art derart weiterzubilden, dass dessen Nachteile vermieden werden und insbesondere bei reduziertem Energieeinsatz ein im wesentlichen von der Bohrtiefe unabhängiger Abfluss der Gesteinsschmelze bei hohem Bohrfortschritt erreicht werden kann.

Diese Aufgabe wird gelöst von einem Schmelzbohr-Verfahren für Tunnel-, Tief- und Explorationsbohrungen, bei dem mittels eines Brenngases aus einer Wasserstoff-Sauerstoff-Mischung als Wärmequelle das Profil des zu erstellenden Tunnels beziehungsweise Bohrloches kontinuierlich niedergeschmolzen wird, und das sich dadurch auszeichnet, dass ab Erreichen der Grenze, bei welcher die Erzeugung der eigentlich nötigen Drucke zum Verpressen der Gesteinsschmelze in das dort überlagerte Seitengestein technisch nicht mehr beherrschbar ist, der Bohrkern zum weitgehenden Konstanthalten des in ihm wirkenden Ueberlagerungsdruckes mittels einer Bohrkern-Scher, Hebe- und Förderanlage fortlaufend abgeschert und weggehoben wird, wobei durch diese Entlastung der jeweils neu durch Herausschmelzen aus dem Gesteinsverband entstehende Bohrkern wegen seiner Befreiung vom äusseren Gegendruck infolge seines Herauslösens aus dem Gesteinsverband birst, die anfallende Schmelze in den Bohrkern abgedrückt wird, und wonach der innig mit Schmelze verpresste und im Volumen um die verdrängte beziehungsweise verpresste Schmelze gewachsene Bohrkern durch Kühlen mittels einer Kühlzone am Schmelzbohrgerät zur Erstarrung gebracht, abgeschert, hochgehoben und mittels einer Fördereinrichtung wegtransportiert wird.

Bei Anwendung des erfindungsgemässen Verfahrens wird also der Bohrkern nicht erschmolzen. Vielmehr beschränkt sich das Aufschmelzen allein auf einen Spalt, dessen Breite nach den technischen Erfordernissen des verwendeten Schmelzbohr-Gerätes, der Versorgungseinheiten und der Bohrkern-Abscher- und - Hebeanlage zu bestimmen ist.

Durch Abtragen des Bohrkerns oberhalb der Schmelzzone wird sichergestellt, dass der Ueberlagerungsdruck im Bereich des Bohrkerns weitgehend konstant gehalten werden kann, sodass sich das Verpressen der anfallenden Gesteinsschmelze aus dem Bohrlochaussenprofil vom umliegenden Seitengestein auf den Bohrkern verlagert. So kann trotz zunehmender Bohrlochtiefe mit annähernd gleichbleibenden Drucken in der Schmelze gearbeitet werden, da die Scherkräfte im Bohrkernbereich niedrig gehalten werden und die Drucke nicht mehr nach den hohen Scherkräften bemessen werden müssen, die in dem das Bohrloch aussen umgebenden Gestein vorliegen.

Durch den ständigen Abbau des Ueberlagerungsdrucks im Bohrkernbereich ergibt sich bei dem erfindungsgemässen Verfahren mit zunehmender Tiefe sogar eine Erleichterung für das Abpressen der anfallenden Gesteinsschmelze. Aufgrund des zunehmenden inneren Gesteinsdruckes an der Sohle des Bohrkerns zerbirst dieser nämlich, sobald das Schmelzbohrgerät den Bohrkern aus dem Gesteinsverand herausschmilzt und damit vom äusseren Gegendruck befreit. Durch den Abfluss der unter Schmelzdruck anstehenden Gesteinsschmelze in den rissig gewordenen Bohrkern erfährt dieser eine Volumenverdichtung oder Volumenvergrösserung um den Betrag der aufgenommenen Gesteinsschmelze aus dem äusseren Bohrlochprofil, beziehungsweise einen entsprechenden Auftrieb.

Das erfindungsgemässe Verfahren kann so ausgeführt werden, dass der Bohrkern nach Passieren einer Kühlzone abgeschert und fortlaufend gefördert wird.

Bei der Anwendung des erfindungsgemässen Schmelzbohr-Verfahrens wird also ein möglichst enges Bohrlochaussenprofil ausgeschmolzen, wobei ein möglichst grosser Bohrkern stehenbleibt, der nach Passieren der inneren Kühlzone des Schmelzbohrgerätes abgeschert und mittels einer Fördereinrichtung abtransportiert wird. Bei Durchführung von Tiefstbohrungen wird die anfallende Schmelze über den Bohrkernbereich abgedrückt, sodass bei fortschreitender Tiefe des Bohrlochs mit im wesentlichen gleichbleibendem Brenngasdruck gearbeitet werden kann.

## Patentansprüche

1. Schmelzbohr-Verfahren für Tunnel-, Tief- und Explorationsbohrungen, bei dem mittels eines Brenngases aus einer Wasserstoff-Sauerstoff-Mischung als Wärmequelle das Profil des zu erstellenden Tunnels beziehungsweise Bohrloches kontinuierlich niedergeschmolzen wird, dadurch gekennzeichnet, dass ab Erreichen der Grenze, bei welcher die Erzeugung der eigentlich nötigen Drucke zum Verpressen der Gesteinsschmelze in das dort überlagerte Seitengestein technisch nicht mehr beherrschbar ist, der Bohrkern zum weitgehenden Konstanthalten des in ihm wirkenden Ueberlagerungsdruckes mittels einer Bohrkern-Scher-, Hebe- und Förderanlage fortlaufend abgeschert und weggehoben wird, wobei durch diese Entlastung der jeweils neu durch Herausschmelzen aus dem Gesteinsverband entstehende Bohrkern wegen seiner Befreiung vom äusseren Gegendruck infolge seines Herauslösens aus dem Gesteinsverband birst, die anfallende Schmelze in den Bohrkern abgedrückt wird, und wonach der innig mit Schmelze verpresste und im Volumen um die verdrängte beziehungsweise verpresste Schmelze gewachsene Bohrkern durch Kühlen mittels einer Kühlzone am Schmelzbohrgerät zur Erstarrung gebracht, abgeschert, hochgehoben und mittels einer Fördereinrichtung wegtransportiert wird.

## Claims

1. A melting-drill process for tunnel drillings, deep drillings and exploratory drillings, in which by means of a burning gas of a mixture of hydrogen and oxygen as heat source, the profile of the tunnel or the bore respectively is continuously molten down, characterized in that, beginning with reaching the zone, at which the overburden pressure in the sidewall rock exceeds the technically controllable melt pressure such that the melt can no longer be pressed into the sidewall rock, the drill core, for keeping the overburden pressure at a roughly constant level, is continuously sheared off and removed and transported away by a shearing-, hoisting- and conveyer device, whereby an unloading of the new core which is molten out of the rock is achieved so that this core cracks due to its isolation from the siderock and its overburden pressure, while the molten rock of the profile is pressed into the cracked core, after which the core, which is now saturated with penetrated molten rock and has grown by the volume of the molten rock, is cooled down by means of a cooling zone of the melting drill device and therefore solidifies, whereafter the core is sheared off, lifted up and transported away by the conveyer-device.

## Revendications

1. Procédé de forage thermique destiné aux forages dans les tunnels, ainsi qu'aux forages en profondeur et d'exploration, dans lequel le profil du tunnel ou du trou de forage à réaliser est fondu de manière continue au moyen d'un gaz de combustion provenant d'un mélange d'hydrogène et d'oxygène constituant la source de chaleur, caractérisé en ce que, à partir du moment où la limite à laquelle la production des pressions nécessaires pour comprimer dans la roche latérale superposée à cet endroit la roche fondue n'est plus maîtrisable techniquement, la carotte est continuellement cisaillée et enlevée au moyen d'une installation de cisaillage, de relèvement et de manutention pour carottes, afin que la pression de couverture agissant dans la carotte soit maintenue largement constante, cependant que, grâce à ce délestage, la carotte toujours nouvelle produite par fusion à partir de la roche, se brise à cause de sa libération de la contre-pression extérieure par suite de son détachement de la roche, que la matière fondue est refoulée dans la carotte, après quoi la carotte, comprimée intimement avec la matière fondue et augmentée, en volume, de la matière refoulée et/ou comprimée est rigidifiée sur l'appareil de forage thermique par refroidissement au moyen d'une zone de refroidissement, ainsi que cisaillée, relevée et évacuée au moyen d'une installation de manutention.
